# EUROPÄISCHE PATENTSCHRIFT

(11) **EP 3 414 593 B1**
(45) Veröffentlichungstag und Bekanntmachung des Hinweises auf die Patenterteilung: **10.08.2022**
(21) Anmeldenummer: 16820304.0
(22) Anmeldetag: 29.12.2016
(51) Int. Cl.: G01S 7/40, G01S 13/34, G01S 13/93, G01S 7/35, G01S 13/931, G01S 13/02

(54) **RADARSENSOR FÜR FAHRERASSISTENZSYSTEME IN KRAFTFAHRZEUGEN**
RADAR SENSOR FOR DRIVER ASSISTANCE SYSTEMS IN MOTOR VEHICLES
CAPTEUR RADAR POUR SYSTÈMES D'AIDE À LA CONDUITE DANS DES VÉHICULES À MOTEUR

(30) Priorität: 12.02.2016 DE 102016202112
(43) Veröffentlichungstag der Anmeldung: 19.12.2018
(73) Patentinhaber: Robert Bosch GmbH, 70442 Stuttgart (DE)
(72) Erfinder: STEINBUCH, Dirk, 71299 Wimsheim (DE); MOERTLBAUER, Karin, 71263 Weil der Stadt (DE); OTT, Michael, 70378 Stuttgart (DE); STEINHAUER, Matthias, 71711 Steinheim (DE)
(86) Internationale Anmeldenummer: PCT/EP2016/082805
(87) Internationale Veröffentlichungsnummer: WO 2017/137136

(56) Entgegenhaltungen:
- DE-A1- 19 729 095
- US-A- 5 528 245
- US-A1- 2005 275 585
- US-A1- 2006 227 040
- US-A1- 2007 139 261
- US-A1- 2015 276 919

## Beschreibung

Die Erfindung betrifft einen Radarsensor für Fahrerassistenzsysteme in Kraftfahrzeugen, mit einer Sende- und Empfangseinrichtung mit mehreren Sende- und Empfangskanälen zum Senden und Empfangen von Radarsignalen, einer elektronischen Auswertungseinrichtung zum Auswerten der empfangenen Signale, einer elektronischen Steuereinrichtung zur Steuerung von Betriebsfunktionen des Radarsensors, einer Selbstüberwachungseinrichtung zur Detektion von Betriebsparametern des Radarsensors, wobei einer der detektierten Betriebsparameter die mit Amplitudenmessschaltungen gemesene Amplitudendifferenz oder die mit Phasenmessschaltungen gemesene der auf zweien der Sende- und Empfangskanäle gesendeten Signale ist, und zum Vergleich der detektierten Parameter mit jeweiligen Sollwerten, einer Stelleinrichtung zum Verändern mindestens eines der Betriebsparameter und einem Regelkreis zum Regeln dieses Parameters auf seinen Sollwert.

### Stand der Technik

Ein Radarsensor dieser Art ist aus US 2015/276919 A1 bekannt.

In Fahrerassistenzsystemen für Kraftfahrzeuge, beispielsweise in Abstandsregelsystemen oder Kollisionswarnsystemen, werden Radarsensoren zur Erfassung des Verkehrsumfelds eingesetzt, insbesondere zur Ortung von anderen Verkehrsteilnehmern. Aus Sicherheitsgründen sollte in solchen Radarsensoren fortlaufend überprüft werden, ob der Sensor auch wirklich funktionsfähig ist und dementsprechend die von dem Radarsensor unterstützte Assistenzfunktion tatsächlich zur Verfügung steht und zuverlässig arbeitet. Diesem Zweck dient die Selbstüberwachungseinrichtung, mit der verschiedene wichtige Betriebsparameter des Radarsensors überwacht werden.

Aus DE 199 45 250 A1 ist ein Radarsensor dieser Art bekannt, bei dem die Selbstüberwachungseinrichtung dazu dient, eine Erblindung des Radarsensors zu erkennen.

Es ist auch bekannt, andere Betriebsparameter zu überwachen, beispielsweise die Amplituden oder Leistungspegel der gesendeten Radarsignale, Amplituden- und Phasendifferenzen zwischen Signalen in verschiedenen Sende- und Empfangskanälen, und dergleichen. Wenn bei einem dieser Parameter die detektierte Abweichung zwischen Soll- und Istwert außerhalb eines zulässigen Toleranzbereiches liegt, so führt dies zu einer Selbstabschaltung des Radarsensors, und dem Fahrer des Kraftfahrzeugs wird auf dem Armaturenbrett ein Warnhinweis angezeigt, dass die betreffende Assistenzfunktion nicht zur Verfügung steht.

Da es sich bei Fahrerassistenzsystemen für Kraftfahrzeuge generell um sicherheitsrelevante Systeme handelt, können für die wichtigen Betriebsparameter des Radarsensors nur enge Toleranzgrenzen zugelassen werden, damit auf jeden Fall ein einwandfreier Betrieb des Radarsensors sichergestellt ist. Je enger die Toleranzgrenzen sind, desto größer ist jedoch die Häufigkeit von Situationen, in denen dem Fahrer ein Fehlersignal angezeigt wird. Dadurch kann die Akzeptanz des Fahrerassistenzsystems eingeschränkt werden.

### Offenbarung der Erfindung

Aufgabe der Erfindung ist es, einen Radarsensor zu schaffen, der ohne Einschränkung der Funktionssicherheit eine höhere Verfügbarkeit aufweist.

Diese Aufgabe wird erfindungsgemäß, wie im Anspruch 1 offenbart wird, dadurch gelöst, dass die Selbstüberwachungseinrichtung dazu ausgebildet ist, den Empfangskanälen ein Testsignal zuzuführen zur Kalibrierung der Amplituden- oder Phasenmessschaltungen .

Wenn einer der überwachten Betriebsparameter eine Drift aufweist und sich zunehmend von seinem Sollwert entfernt, beispielsweise aufgrund von Temperatureinflüssen, Alterungseffekten, Bauteildefekten oder dergleichen, so ermöglichen es der Regelkreis und die zugehörige Stelleinrichtung, diesen Parameter auf seinen Sollwert zurück zu regeln, bevor der zulässige Toleranzbereich verlassen wird. Dadurch bleibt die Funktion des Radarsensors zumindest so lange erhalten, bis der Stellbereich der Stelleinrichtung ausgeschöpft ist. Auf diese

Weise lässt sich die Verfügbarkeit des Radarsensors beträchtlich erhöhen, ohne dass durch Soll/Ist-Abweichungen der Parameter das Risiko einer Fehlfunktion erhöht wird.

Typischerweise weisen Radarsensoren für Kraftfahrzeuge mehrere Sendekanäle auf, über die mehrere Sendeantennen gespeist werden. Dadurch kann eine gewisse Strahlformung erreicht werden. Bei einem winkelauflösenden Radarsensor sind mehrere Empfangsantennen und dementsprechend mehrere Empfangskanäle vorhanden, so dass durch Vergleich der Amplituden und/oder Phasen der in den verschiedenen Kanälen empfangenen Signale eine Winkelschätzung des georteten Objekts ermöglicht wird. In die Empfangskanäle werden Testsignale mit festen Amplituden- und/oder Phasenbeziehungen eingespeist. Zu den überwachten Betriebsparametern gehören die Amplituden- und/oder Phasenbeziehungen , die in den verschiedenen Empfangskanälen für die Testsignale gemessen werden. Als Stelleinrichtungen für die Amplitudenbeziehungen können in diesen Fällen regelbare Verstärker vorgesehen sein, und als Stelleinrichtungen für die Phasenbeziehungen können regelbare Phasenschieber vorgesehen sein.

Vorteilhafte Ausgestaltungen und Weiterbildungen der Erfindung sind in den Unteransprüchen angegeben.

In einer Ausführungsform ist einer der überwachten Betriebsparameter die Amplitude oder Leistung des gesendeten Radarsignals. Die Stelleinrichtung ist in diesem Fall ein regelbarer Verstärker, mit dem die Amplitude oder Leistung auf dem Sollwert geregelt wird.

Da der Betrieb der Sende- und Empfangseinrichtung unvermeidlich eine gewisse Verlustleistung mit sich bringt, die zu einer Erwärmung des Radarsensors führt, stellt auch die Temperatur des Radarsensors einen wesentlichen Betriebsparameter dar, der überwacht werden sollte. Eine Stelleinrichtung, die eine Überhitzung des Radarsensors verhindert, kann durch ein Modul in der Steuereinrichtung gebildet werden, das die Wiederholfrequenz der aufeinanderfolgenden Messzyklen modifiziert, so dass zwischen den einzelnen Messzyklen mehr oder weniger große Pausen entstehen, in denen der Radarsensor sich abkühlen kann. Zwar wird durch eine Verringerung der Frequenz der Messzyklen die zeitliche Auflösung der Radarortungen eingeschränkt, doch ist dies unter Sicherheitsgesichtspunkten weniger schädlich als ein Totalausfall des Radarsensors wegen Überhitzung.

Im folgenden werden Ausführungsbeispiele anhand der Zeichnung näher erläutert.

Es zeigen:
- Fig. 1: ein Blockdiagramm eines erfindungsgemäßen Radarsensors;
- Fig. 2: ein Zeitdiagramm zur Illustration einer Selbstüberwachungs- und Korrekturfunktion des Radarsensors;
- Fig. 3: ein Diagramm eines Sendekanals des Radarsensors mit einem Regelkreis zur Regelung der Signalamplitude;
- Fig. 4: ein Diagramm zweier Sendekanäle mit einem Regelkreis zur Regelung einer Amplitudenbeziehung zwischen den beiden Kanälen;
- Fig. 5: ein Diagramm zweier Sendekanäle mit einem Regelkreis zur Regelung einer Phasenbeziehung zwischen den beiden Kanälen;
- Fig. 6: ein Diagramm zweier Empfangskanäle des Radarsensors mit einem Regelkreis zur Regelung einer Amplitudenbeziehung zwischen den Empfangskanälen;
- Fig. 7: ein Diagramm zweier Empfangskanäle mit einem Regelkreis zur Regelung einer Phasenbeziehung zwischen den beiden Kanälen; und
- Fig. 8: ein Zeitdiagramm zur Illustration einer zeitlichen Abfolge verschiedener Messzyklen des Radarsensors.

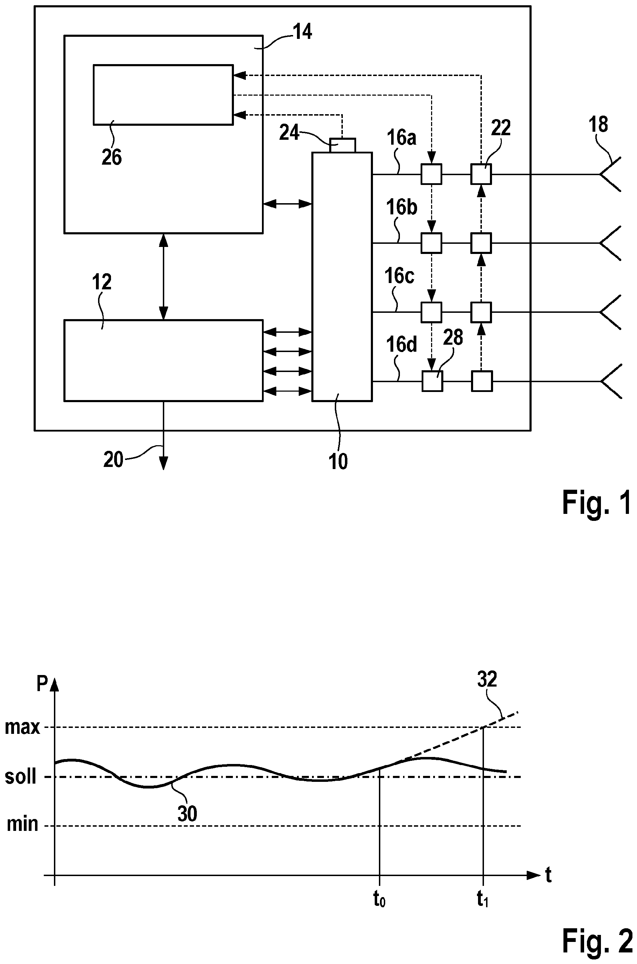

Der in Fig. 1 gezeigte Radarsensor weist eine Sende- und Empfangseinrichtung 10, eine Auswertungseinrichtung 12 und eine Steuereinrichtung 14 auf, die verschiedene Prozessabläufe in der Sende- und Empfangseinrichtung 10 und der Auswertungseinrichtung 12 steuert.

Die Sende- und Empfangseinrichtung 10 dient dazu, Radarsignale auf vier parallelen Sende- und Empfangskanälen 16a-16d zu senden und zu empfangen. Jedem Kanal ist eine Antenne 18 zugeordnet, die sowohl zum Senden des Radarsignals als auch zum Empfang des Radarechos dient.

Als Beispiel soll angenommen werden, dass es sich bei dem hier beschriebenen Radarsensor um ein sogenanntes FMCW-Radar (Frequency Modulated Continuous Wave) handelt. Die Sende- und Empfangseinrichtung 10 speist dann in jeden der Sende- und Empfangskanäle 16a-16d ein Radarsignal ein, dessen Frequenz rampenförmig moduliert ist, so dass das Signal aus einer Serie aufeinanderfolgender linearer Frequenzrampen besteht. Das empfangene Radarecho wird dann in jedem Kanal mit einem Anteil des zugehörigen Sendesignals gemischt. Als Mischprodukt erhält man so ein Basisbandsignal, dessen Frequenz dem Frequenzunterschied zwischen dem gesendeten Signal und dem empfangenen Signal entspricht. Dieser Frequenzunterschied ist einerseits von der Rampensteigung und der Signallaufzeit vom Radarsensor zum Objekt und zurück zum Radarsensor abhängig und enthält somit Information über den Abstand des georteten Objekts. Andererseits ist der Frequenzunterschied jedoch aufgrund des Doppler-Effekts auch von der Relativgeschwindigkeit des Objekts abhängig.

Die in den vier Kanälen erhaltenen Basisbandsignale werden digitalisiert und in der digitalen Auswertungseinrichtung 12 weiter ausgewertet. Im einzelnen wird das Signal in jedem Kanal über die Dauer einer Frequenzrampe aufgezeichnet und durch Schnelle Fourier-Transformation (FFT) in ein Spektrum umgewandelt. Ein geortetes Objekt zeichnet sich in diesem Spektrum als ein Peak bei der Frequenz ab, die durch den Abstand und die Relativgeschwindigkeit des Objekts bestimmt ist. Durch Auswertung mindestens zweier Frequenzrampen mit unterschiedlicher Steigung lässt sich aus den Frequenzlagen der auf den beiden Rampen erhaltenen Peaks der Abstand und die Relativgeschwindigkeit des Objekts eindeutig bestimmen.

Durch Vergleich der Amplituden und Phasen der Signale, die in den vier verschiedenen Kanälen erhalten werden, lässt sich außerdem Information über den Azimutwinkel des Objekts gewinnen, also über die Richtung, aus der die an dem Objekt reflektierte Radarstrahlung empfangen wird.

An einem Ausgang 20 kann die Auswertungseinrichtung 12 somit einem nachgeschalteten Fahrerassistenzsystem Information über die Ortungsdaten (Abstände, Relativgeschwindigkeiten und Azimutwinkel) der georteten Objekte zur Verfügung stellen.

Für eine ordnungsgemäße Funktion des Radarsensors ist es erforderlich, dass die Amplituden der in den einzelnen Kanälen gesendeten Radarsignale nicht zu stark von einem vorgegebenen Sollwert abweichen. Äquivalent dazu ist die Forderung, dass die (zum Amplitudenquadrat proportionale) Leistung des Radarsignals innerhalb bestimmter Toleranzgrenzen einer vorgegebenen Soll-Leistung entspricht.

Außerdem müssen zwischen den Signalen, die in den verschiedenen Kanälen gesendet werden, bekannte Amplituden- und Phasenbeziehungen bestehen. Im einfachsten Fall haben alle Signale die gleiche Amplitude und die gleiche Phase. Signifikante Amplituden- und/oder Phasenunterschiede zwischen zwei oder mehreren der vier Kanäle würden zu Verfälschungen des Messergebnisses führen, insbesondere bei der Bestimmung des Azimutwinkels.

Die absolute Amplitude der gesendeten Signale und die Amplituden- und Phasendifferenzen von Kanal zu Kanal stellen deshalb wichtige Betriebsparameter des Radarsensors dar, die innerhalb gewisser Toleranzgrenzen einzuhalten sind. Zur Überwachung dieser und anderer Betriebsparameter weist der Radarsensor eine Selbstüberwachungseinrichtung auf, die durch verschiedene Detektionssysteme 22, 24 und ein in der Steuereinrichtung 14 implementiertes Selbstüberwachungsmodul 26 gebildet wird. Im gezeigten Beispiel weist jeder der vier Sende- und Empfangskanäle 16a-16d ein eigenes Detektionssystem 22 auf. Das Detektionssystem 24 dient zur Messung der Temperatur des Radarsensors, insbesondere der Temperatur der Sende- und Empfangseinrichtung 10, bei deren Betrieb Verlustwärme entsteht. Das Selbstüberwachungsmodul 26 nimmt Messsignale der Detektionssysteme 22, 24 auf, vergleicht diese mit jeweiligen Sollwerten und zugehörigen Toleranzgrenzen und veranlasst, wie an sich bekannt ist, die Ausgabe eines Warnsignals, wenn ein Betriebsparameter außerhalb des Toleranzbereiches liegt. Bei dem hier gezeigten Radarsensor ist das Selbstüberwachungsmodul 26 jedoch weiterhin dazu eingerichtet, Stellbefehle an verschiedene Stelleinrichtungen 28 auszugeben, mit denen die relevanten Betriebsparameter verändert werden können. Die Detektionssysteme 22, 24, das Selbstüberwachungsmodul 26 und die Stelleinrichtungen 28 bilden somit einen Regelkreis, mit dem die relevanten Betriebsparameter auf ihre jeweiligen Sollwerte geregelt werden können.

Das Grundprinzip ist in Fig. 2 veranschaulicht. Dort gibt eine Kurve 30 die für einen einzelnen Betriebsparameter P erhaltenen Messwerte als Funktion der Zeit t an. Eine strichpunktierte Linie markiert den Sollwert "soll", der für diesen Parameter P eingehalten werden sollte, und dünnere gestrichelte Linien markieren einen Toleranzbereich mit einer unteren Grenze "min" und einer oberen Grenze "max". Bei fehlerfreiem Betrieb des Radarsensors schwankt der durch die Kurve 30 angegebene Messwert mit geringer Schwankungsbreite um den Sollwert. Im gezeigten Beispiel tritt jedoch zum Zeitpunkt to eine Störung ein, die ohne Gegenmaßnahme dazu führen würde, dass sich der Parameter weiter vom Sollwert entfernt und zu einem Zeitpunkt t₁ den Toleranzbereich verlässt, wie in Fig. 2 durch eine gestrichelte Linie 32 angegeben wird. Sobald sich jedoch der Messwert für den Parameter P um einen bestimmten Betrag von dem Sollwert entfernt hat, aktiviert die Selbstüberwachungseinrichtung 26 die zugehörige Stelleinrichtung 28, die bewirkt, dass der Parameter wieder auf den Sollwert zurück geregelt wird, wie durch die Kurve 30 angegeben wird.

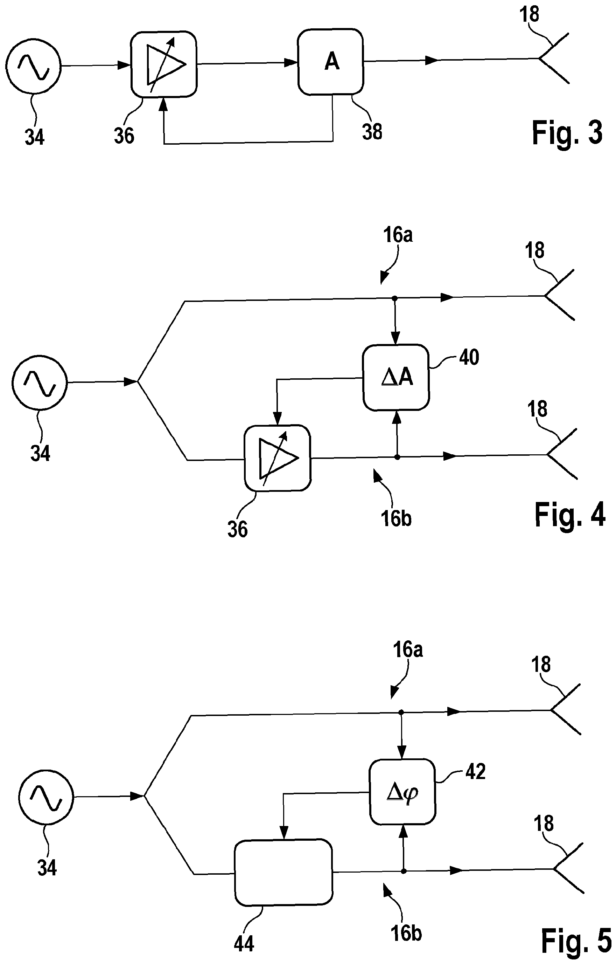

Fig. 3 zeigt einen einzelnen Sendekanal, also den Sendepfad eines der Sende- und Empfangskanäle 16a - 16d. Ein Oszillator 34 erzeugt ein frequenzmoduliertes Sendesignal, das über einen Verstärker 36 und eine Leistungsmessschaltung 38 an die Antenne 18 weitergeleitet wird. Der Verstärker 36 ist Teil der in Fig. 1 gezeigten Stelleinrichtung 28. Die Leistungsmessschaltung 38 ist Teil der Detektionseinrichtung 22 und misst die Leistung und damit implizit die Amplitude A des Sendesignals und meldet das Messergebnis (über das Selbstüberwachungsmodul 26) an den Verstärker 36 zurück. Wenn die Amplitude des Sendesignals unter dem Sollwert liegt, wird im Verstärker 36 die Verstärkung erhöht, und die Verstärkung wird verringert, wenn die Amplitude über den Sollwert steigt. Auf diese Weise wird die Amplitude A des Sendesignals bei laufendem Betrieb fortlaufend auf den Sollwert geregelt.

In Fig. 4 sind schematisch zwei Sendekanäle gezeigt, bei denen es sich beispielsweise um die Sendepfade der Sende- und Empfangskanäle 16a und 16b handeln kann. Beide Sendepfade werden aus dem Oszillator 34 gespeist. In einer anderen Ausführungsform können jedoch auch separate Oszillatoren für jeden Sendekanal vorgesehen sein.

Eine Leistungsmessschaltung 40 ist zwischen die zugehörigen Antennen 18 geschaltet und misst implizit die Amplitude ΔA des Differenzsignals zwischen den beiden Sendesignalen. Das Messergebnis wird an den Verstärker 36 mindestens eines der beiden Sendekanäle zurückgemeldet. Dieser Verstärker wird daraufhin so geregelt, dass die Amplitude ΔA des Differenzsignals auf den Sollwert null geregelt wird.

Schaltungen der in Fig. 4 gezeigten Art können auch für andere Paarungen der vier Sende- und Empfangskanäle 16a - 16d vorgesehen sein, so dass die Amplituden aller vier Sendesignale miteinander abgeglichen und auf denselben Sollwert geregelt werden können. Das lässt sich beispielsweise dadurch erreichen, dass der Sende- und Empfangskanal 16a als Master dient, in dem die Amplitude auf den Sollwert geregelt wird, während die drei übrigen Sende- und Empfangskanäle als Slaves arbeiten, deren Amplitude mit der Amplitude des Masters abgeglichen wird. Alternativ ist es auch möglich, die Amplitude ΔA des Differenzsignals zwischen den Paaren der Sende- und Empfangskanäle 16a und 16b; 16b und 16c und 16c und 16d zu messen und zu regeln.

Fig. 5 zeigt einen anderen Teil der Detektionseinrichtung 22 und der Stelleinrichtung 28 für die Sende- und Empfangskanäle 16a und 16b. In diesem Teil der Schaltung wird mit einer zwischen die Antennen 18 geschalteten Phasenmessschaltung 42 die Phasendifferenz Δϕ zwischen den Sendesignalen gemessen. Das Messergebnis wird an einen Phasenschieber 44 in mindestens einen der Kanäle zurückgemeldet, so dass die Phasendifferenz Δϕ in einem geschlossenen Regelkreis auf einen Sollwert geregelt wird, beispielsweise auf den Sollwert null. Für die Kanalpaarungen, für die Schaltungen gemäß Fig. 5 vorgesehen sind, und für die Master/Slave-Beziehungen gilt das gleiche wie in Fig. 4.

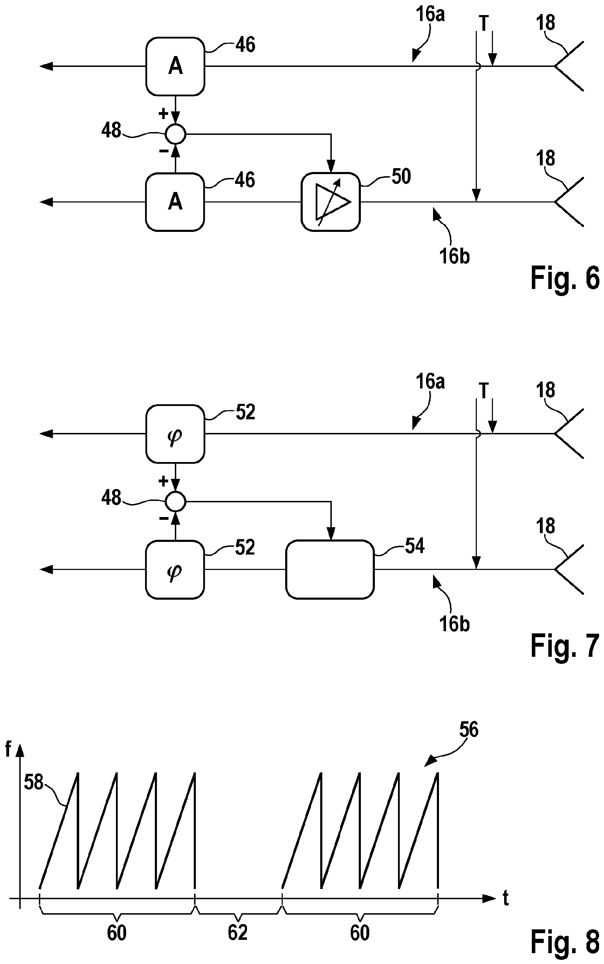

In den Empfangspfaden der Sende- und Empfangskanäle werden die Amplituden und Phasen der empfangenen Signale gemessen. Die zugehörigen Messschaltungen, die zum Teil in der Sende- und Empfangseinrichtung 10, zum Teil aber auch in der Auswertungseinrichtung 12 implementiert sein können, sollten so kalibriert sein, dass sie bei Zufuhr identischer Signale in allen Kanälen auch die gleichen Amplituden und die gleichen Phasen messen. Fig. 6 zeigt eine Schaltung für ein Paar der Sende- und Empfangskanäle, beispielsweise 16a, 16b, mit der die Kalibrierung der Amplitudenmessung bei laufendem Betrieb überprüft und erforderlichenfalls korrigiert werden kann. Dazu wird vom Selbstüberwachungsmodul 26 ein Testsignal T an die Ausgänge der beiden Antennen 18 angelegt. Amplitudenmessschaltungen 46 messen in jedem Kanal die Empfangsamplitude, und ein Subtraktionsglied 48 meldet die Amplitudendifferenz an einen Empfangsverstärker 50 in mindestens einem der Kanäle zurück. Auf diese Weise wird die für das Testsignal T gemessene Amplitudendifferenz auf den Sollwert null geregelt.

Fig. 7 zeigt eine entsprechende Schaltung zur Überprüfung und Korrektur der Phasenkalibrierung. Anstelle der Amplitudenmessschaltungen 46 in Fig. 6 sind hier Phasenmessschaltungen 52 vorgesehen, und anstelle des Empfangsverstärkers 50 ist ein Phasenschieber 54 vorgesehen.

Mit Schaltungen der in Fig. 6 und 7 gezeigten Art können die Empfangsamplituden und -phasen in allen Kanälen fortlaufend kalibriert werden.

Im gezeigten Beispiel wird allen Empfangskanälen jeweils dasselbe Testsignal T zugeführt. Es ist jedoch auch möglich, den Empfangskanälen verschiedene Testsignale zuzuführen, beispielsweise Signale, die Empfangssignale der Antennen 18 simulieren, die vor Inbetriebnahme des Radarsensors in einer Testanordnung mit einem realen Objekt erhalten wurden.

Ein weiterer wichtiger Betriebsparameter des Radarsensors ist die Temperatur der Sende- und Empfangseinrichtung 10, die mit Hilfe der Detektionseinrichtung 24 gemessen wird. Eine Besonderheit besteht hier allerdings darin, dass es nicht darum geht, eine bestimmte Solltemperatur einzuhalten, sondern lediglich darum, eine Überhitzung des Radarsensors, also eine Überschreitung einer bestimmten Maximaltemperatur zu verhindern. Das lässt sich beispielsweise mit einer Stelleinrichtung erreichen, die die Wärmeproduktion in der Sende- und Empfangseinrichtung 10 so weit reduziert, dass die über übliche Wärmesenken abgeführte Wärmemenge die Menge der neu produzierten Wärme übersteigt.

Fig. 8 zeigt ein Frequenzdiagramm für ein Sendesignal, das in einem der Sende- und Empfangskanäle oder in allen vier Kanälen gesendet wird. Eine sägezahnförmige Kurve 56 gibt hier die Frequenz f des Sendesignals als Funktion der Zeit t an. Im gezeigten Beispiel wird die Frequenz f so moduliert, dass aufeinanderfolgende Frequenzrampen 58 mit gleicher Steigung gebildet werden. In der Praxis werden üblicherweise Frequenzrampen mit unterschiedlichen Steigungen gebildet, die nach einem bestimmten Muster miteinander abwechseln. Das ist jedoch für die hier beschriebene Erfindung nicht wesentlich.

Bei einem herkömmlichen FMCW-Radar bilden die Frequenzrampen 58 eine lückenlose Folge, d. h., das Sendesignal wird kontinuierlich gesendet. Bei dem hier beschriebenen Radarsensor ist das Sendesignal jedoch in einzelne Bursts 60 aus jeweils mehreren Frequenzrampen aufgeteilt, und die Bursts 60 sind durch Pausen 62 unterbrochen, in denen kein Signal gesendet und dementsprechend auch keine Verlustwärme erzeugt wird. Die Stelleinrichtung zur Begrenzung der Temperatur wird dadurch gebildet, dass eine Funktion des Selbstüberwachungsmoduls 26 die Länge der Pausen 62 zwischen den einzelnen Bursts 60 in Abhängigkeit von der gemessenen Temperatur variiert.

## Patentansprüche

1. Radarsensor für Fahrerassistenzsysteme in Kraftfahrzeugen, mit einer Sende- und Empfangseinrichtung (10) mit mehreren Sende- und Empfangskanälen (16a, 16b) zum Senden und Empfangen von Radarsignalen, einer elektronischen Auswertungseinrichtung (12) zum Auswerten der empfangenen Signale, einer elektronischen Steuereinrichtung (14) zur Steuerung von Betriebsfunktionen des Radarsensors, einer Selbstüberwachungseinrichtung (22, 24, 26) zur Detektion von Betriebsparametern des Radarsensors, wobei einer der detektierten Betriebsparameter die mit Amplitudenmessschaltungen (46) gemessene Amplitudendifferenz oder die mit Phasenmessschaltungen (52) gemessene Phasendifferenz der auf zweien der Sende- und Empfangskanäle gesendeten Signale ist, und zum Vergleich der detektierten Betriebsparameter mit jeweiligen Sollwerten, einer Stelleinrichtung (28) zum Verändern mindestens eines der detektierten Betriebsparameter und einem Regelkreis zum Regeln dieses Betriebsparameters auf seinen Sollwert, **dadurch gekennzeichnet, dass** die Selbstüberwachungseinrichtung (22, 24, 26) dazu ausgebildet ist, den Empfangskanälen ein Testsignal (T) zuzuführen zur Kalibrierung der Amplituden- oder Phasenmessschaltungen (46, 52), so dass das detektierte Betriebsparameter auf seinen Sollwert geregelt wird.

2. Radarsensor nach Anspruch 1, bei dem einer der geregelten Betriebsparameter die Amplitude (A) des gesendeten Signals ist.

3. Radarsensor nach Anspruch 1 oder 2, mit mindestens zwei Sendekanälen (16a, 16b), bei dem einer der geregelten Betriebsparameter die Amplitudendifferenz (ΔA) der auf den beiden Kanälen gesendeten Signale ist.

4. Radarsensor nach einem der vorstehenden Ansprüche, mit mindestens zwei Sendekanälen (16a, 16b), bei dem einer der geregelten Betriebsparameter die Phasendifferenz Δϕ der auf den beiden Kanälen gesendeten Signale ist.

5. Radarsensor nach einem der vorstehenden Ansprüche, der eine Detektionseinrichtung (24) zur Messung der Temperatur des Radarsensors aufweist und bei dem einer der geregelten Betriebsparameter die Temperatur des Radarsensors ist.

6. Radarsensor nach Anspruch 5, bei dem die Selbstüberwachungseinrichtung (22, 24, 26) dazu ausgebildet ist, die Sende- und Empfangseinrichtung (10) so anzusteuern, dass Zeitspannen (60), in denen Radarsignale gesendet werden, von Pausen (62) unterbrochen sind, in denen keine Radarsignale gesendet werden, wobei die Länge der Pausen (62) von der gemessenen Temperatur abhängig ist.

## Claims

1. Radar sensor for driver assistance systems in motor vehicles, having a transmitting and receiving device (10) with a plurality of transmitting and receiving channels (16a, 16b) for transmitting and receiving radar signals, an electronic evaluation device (12) for evaluating the received signals, an electronic control device (14) for controlling operating functions of the radar sensor, a self-monitoring device (22, 24, 26) for detecting operating parameters of the radar sensor, wherein one of the detected operating parameters is the amplitude difference, measured using amplitude measuring circuits (46), or the phase difference, measured using phase measuring circuits (52), between the signals transmitted on two of the transmitting and receiving channels, and for comparing the detected operating parameters with respective target values, an actuating device (28) for changing at least one of the detected operating parameters, and a control loop for controlling this operating parameter to its target value, **characterized in that** the self-monitoring device (22, 24, 26) is designed to supply a test signal (T) to the receiving channels for the purpose of calibrating the amplitude or phase measuring circuits (46, 52), with the result that the detected operating parameter is controlled to its target value.

2. Radar sensor according to Claim 1, in which one of the controlled operating parameters is the amplitude (A) of the transmitted signal.

3. Radar sensor according to Claim 1 or 2, having at least two transmitting channels (16a, 16b), in which one of the controlled operating parameters is the amplitude difference (ΔA) between the signals transmitted on the two channels.

4. Radar sensor according to one of the preceding claims, having at least two transmitting channels (16a, 16b), in which one of the controlled operating parameters is the phase difference Δϕ between the signals transmitted on the two channels.

5. Radar sensor according to one of the preceding claims, which has a detection device (24) for measuring the temperature of the radar sensor, and in which one of the controlled operating parameters is the temperature of the radar sensor.

6. Radar sensor according to Claim 5, in which the self-monitoring device (22, 24, 26) is designed to control the transmitting and receiving device (10) in such a manner that periods of time (60) in which radar signals are transmitted are interrupted by pauses (62) in which no radar signals are transmitted, wherein the length of the pauses (62) depends on the measured temperature.

## Revendications

1. Capteur radar destiné à des systèmes d'assistance à la conduite de véhicules automobiles, ledit capteur radar comprenant un dispositif d'émission et de réception (10) pourvu d'une pluralité de canaux d'émission et de réception (16a, 16b) destinés à émettre et recevoir des signaux radar, un dispositif d'évaluation électronique (12) destiné à évaluer les signaux reçus, un dispositif de commande électronique (14) destiné à commander les fonctions de fonctionnement du capteur radar, un dispositif d'auto-surveillance (22, 24, 26) destiné à détecter les paramètres de fonctionnement du capteur radar, l'un des paramètres de fonctionnement détecté étant la différence d'amplitude, mesurée avec des circuits de mesure d'amplitude (46), ou la différence de phase, mesurée avec des circuits de mesure de phase (52), des signaux émis sur deux canaux d'émission et de réception, et destiné à comparer les paramètres de fonctionnement détectés à des valeurs cibles respectives, un dispositif de réglage (28) destiné à modifier au moins un des paramètres de fonctionnement détectés et un circuit de régulation destiné à réguler ce paramètre de fonctionnement à sa valeur cible, **caractérisé en ce que** le dispositif d'auto-surveillance (22, 24, 26) est conçu pour fournir un signal de test (T) aux canaux de réception afin d'étalonner les circuits de mesure d'amplitude ou de phase (46, 52) de sorte que le paramètre de fonctionnement détecté soit régulé à sa valeur cible.

2. Capteur radar selon la revendication 1, dans lequel l'un des paramètres de fonctionnement régulé est l'amplitude (A) du signal émis.

3. Capteur radar selon la revendication 1 ou 2, qui comprend au moins deux canaux d'émission (16a, 16b) et dans lequel l'un des paramètres de fonctionnement régulé est la différence d'amplitude (ΔA) des signaux émis sur les deux canaux.

4. Capteur radar selon l'une des revendications précédentes, qui comprend au moins deux canaux d'émission (16a, 16b) et dans lequel l'un des paramètres de fonctionnement régulé est la différence de phase Δϕ des signaux émis sur les deux canaux.

5. Capteur radar selon l'une des revendications précédentes, qui comporte un dispositif de détection (24) destiné à mesurer la température du capteur radar et dans lequel l'un des paramètres de fonctionnement régulé est la température du capteur radar.

6. Capteur radar selon la revendication 5, dans lequel le dispositif d'auto-surveillance (22, 24, 26) est conçu pour commander le dispositif d'émission et de réception (10) de telle sorte que des intervalles de temps (60), pendant lesquels des signaux radar sont émis, soient interrompus par des pauses (62) dans lesquelles aucun signal radar n'est envoyé, la durée des pauses (62) dépendant de la température mesurée.
